# EUROPEAN PATENT SPECIFICATION

(11) **EP 2 321 102 B1**
(45) Date of publication and mention of the grant of the patent: **14.03.2018**
(21) Application number: 09787075.2
(22) Date of filing: 02.09.2009
(51) Int. Cl.: B28D 1/00, B29C 35/02, C08L 67/06, C08J 3/24, C04B 26/14, C08K 5/14

(54) **PROCESS FOR THE PREPARATION OF CONGLOMERATE STONE ARTICLES, COMPRISING THE USE OF A PEROXIDE INITIATOR**
VERFAHREN FÜR DIE HERSTELLUNG VON STEINGEMISCHARTIKELN UNTER VERWENDUNG EINES PEROXIDINITIATORS
PROCÉDÉ DE PRÉPARATION D ARTICLES EN PIERRE AGGLOMÉRÉE FAISANT APPEL À UN INITIATEUR AU PEROXYDE

(30) Priority: 11.09.2008 IT TV20080111
(43) Date of publication of application: 18.05.2011
(73) Proprietor: Toncelli, Luca, 36061 Bassano del Grappa (Vicenza) (IT)
(72) Inventor: Toncelli, Luca, 36061 Bassano del Grappa (Vicenza) (IT)
(74) Representative: Pistolesi, Roberto
(86) International application number: PCT/IB2009/053825
(87) International publication number: WO 2010/029468

(56) References cited:
- AU-A- 5 707 365
- JP-A- 2003 183 543
- US-A- 4 363 889
- US-A1- 2008 154 002

## Description

The present invention relates to the manufacture of conglomerate articles and more particularly to a method for manufacturing slabs or blocks from a mix composed of a granulated stone material and/or sand and a polyester-resin based binder. In particular, it relates to a method for manufacturing blocks of polyester-resin agglomerated stone blocks, normally with dimensions greater than 3 cubic metres, where hardening of the resin is performed at an intermediate temperature between a so-called cold (ambient) temperature and a so-called hot temperature. It also relates to a ternary peroxide initiator system which can be used in this method.

### DEFINITIONS

For the purposes of the present invention, the term "slab" is understood as meaning a solid defined by two flat parallel faces separated by a distance which is very small compared to the other two dimensions, namely a solid in which the two dimensions which define the flat face are at least one order of magnitude greater than the third dimension.

The term "block" is instead understood as meaning a three-dimensional solid, namely a solid in which the three individual dimensions are preferably of the same order of magnitude, even more preferably a parallelepiped.

The term "polyester resin" is understood as meaning a fluid mixture consisting of a polyester and a polymerizable monomer, generally of the vinylic, allylic or acrylic type, preferably styrene; this mixture, if subjected to heating (usually owing to the action of peroxides) crosslinks, namely forms cross-bonds between the polyester chains, with consequent hardening.

The term "granulated stone material" is understood as meaning both a material obtained by means of crushing of natural rock, namely gravel, and a stone-like material obtained by crushing ceramic material or similar materials, namely artificial rocks; these granules have a size generally of between 2.5 and 120 mm.

The term "sand" is understood as meaning granules of rock with dimensions of between 2 mm and 0.063 mm.

The term "powder or filler" is understood as meaning powders obtained from the grinding of rocks, with dimensions normally less than 0.045 mm.

### STATE OF THE ART

A method for the manufacture of articles in the forms of blocks or slabs from a mix composed of a granulated stone material and/or sand and a binder based on a hardening resin, in particular a polyester resin, has been known for many years.

According to the known art, the method for manufacturing blocks of stone agglomerated with polyester resin may be summarised very briefly as follows:
- preparation of the initial components (granulated stone material, sand, powders, resin containing initiators and accelerators);
- mixing of the initial components;
- filling a formwork or mould, which is normally made of metal;
- compacting the mix contained in the formwork;
- hardening of the resin and therefore the mix;
- removal of the partially hardened block from the formwork;
- completion of the catalysis reaction with final hardening of the block.

The following are also normally added to the resin:
- an initiator (usually peroxides are used) in an amount normally varying between 1% and 2% by weight of the resin;
- an accelerating agent in an amount normally varying between 0.15% and 0.20% by weight of the resin (usually cobalt naphthenates or octoates are used).

The action of the initiator consists essentially in that of activating the hardening reaction of the resin. In particular, if the temperature of the resin exceeds a predefined limit value, the initiator decomposes, forming free radicals and, with the action of the styrene, creates crosslinking bonds which cause complete hardening of the resin.

The action performed by the accelerating agent is instead that of reducing or in any case regulating the decomposition temperature of the initiator and triggering hardening.

Normally the catalysis of the blocks of stone agglomerated with polyester resin is performed at ambient temperature (so-called "cold" catalysis), using very reactive initiators, such as acetyl acetone peroxide.

The quantity of accelerating agent, which regulates the speed of triggering of catalysis at a low temperature, is chosen so as to prevent the reaction from starting during mixing of the components and manufacture of the block, thus hindering - at least partially - these manufacturing operations.

The quantity of initiator and accelerating agent are preferably chosen so as to trigger crosslinking at ambient temperature about one hour after preparation of the resin, i.e. sufficient time for preparation of the mix, filling of the mould and formation of the block. It should be pointed out that the crosslinking reaction is in any case exothermic, therefore causing heating of the mass, and causes a reduction in volume of the block equal to about 1%.

The presence of the styrene monomer as reactive solvent in the polyester resin, and therefore in the mix, gives rise to various environmental problems due to its harmful effects and the risk of explosion associated with its high volatility; in fact sophisticated and costly plants for capturing and eliminating the styrene vapours are necessary in order to comply with the increasingly severe standards.

Cold catalysis of the polyester resin has moreover the drawback that it does not allow a complete crosslinking reaction, such that the styrene present in the starting composition of the resin is not used completely in the crosslinking reaction; free and unbonded styrene therefore remains inside the block of agglomerated material.

Moreover, the use of aromatic peroxide initiators produces polluting aromatic hydrocarbons, which are normally known as "BTEX", i.e. benzene, toluene, ethylbenzene and xylenes. The BTEX belong to the more general category of so-called VOCs (Volatile Organic Compounds), release of which into the environment (air, water or also soil) always constitutes a source of pollution.

Therefore, when the hardened block is sawn into slabs and/or machining of the slabs thus obtained is performed, waste is generated and this, being mixed with the cutting and cooling fluid, forms so-called machining sludge, namely a mixture of water and aggregate and resin powder, also containing the free styrene and BTEX, with consequent problems with regard to the environmental impact and disposal.

In addition there is the fact that the ambient temperature at which the catalysis reaction is performed may be subject to significant fluctuations depending on the season: lower in winter and higher in summer. This results in a finished product with physical and mechanical characteristics which may vary depending on the season or, even, depending on the specific conditions on the day of production, with variable amounts of styrene and BTEX.

An alternative to the manufacture of blocks of stone agglomerated by means of cold catalysis of the polyester resin consists in so-called "hot" catalysis which is performed at temperatures generally higher than 80 - 90 °C, which ensures that all or most of the free styrene present in the resin is used in the catalysis reaction.

However, whereas for small-size articles, such as the slabs, hot catalysis is rapid and can be easily managed, it becomes fairly complex for large-size articles such as blocks. This is because, in the case of slabs, owing to their limited mass, the quantity of energy required for heating is not particularly high and, during the process, both heating and cooling are performed in a sufficiently uniform manner such that the catalysis reaction takes place fully without generating major stresses. Therefore, during the manufacture of slabs, it is usually convenient to use hot catalysis, so that the initiators used are such that they activate the reaction at a temperature of about 80°C.

In the case of blocks, however, the situation is completely different owing to their dimensions; consequently, the hot reaction for them has the following drawbacks:
- it is required to heat the mix already poured into the mould in order for the catalysis reaction to start and this requires a considerable amount of energy;
- heating normally occurs by means of conduction from the outer surface of the mix present in the mould and therefore from the inner surface of the mould, so that it is not uniform in that the inner part of the mix heats up less quickly than the outer part and therefore the catalysis takes place at different times within the dimensions of the block;
- cooling of the block is also not uniform since the outer part cools more rapidly than the inner part, thus creating a temperature gradient which produces internal stresses, which in turn are the cause of cracking.

In order to be able to produce a block by means of hot catalysis, avoiding the risk of cracking, it is therefore required to have a very slow, controlled, heating cycle and a very slow, controlled, cooling cycle, in order to prevent the formation of internal stresses and cracking. The overall cycle, in addition to requiring a large amount of energy, thus lasts about 4 days, making the process extremely complex, costly and inconvenient.

The patent document US4363889 in the name of Hoshino et al. discloses an anticorrosive coating composition comprising a) 100 parts by weight of an unsaturated polyester resin, b) 10 to 100 parts by weight of a glass flake having an average thickness of 0.5 to 5 microns and an average particle size of 100 to 400 microns, or 10 to 70 parts by weight of said glass flake and 10 to 150 parts of scaly metal pigment, c) 0.1 to 1.0 part by weight of a ketone peroxide and d) 0.5 to 2.0 parts by weight of a hydroperoxide and/or a peroxy ester.

The patent document AU5707365 in the name of Esso concerns the coating of road surfaces wherein inert materials, sand and preheated stone materials are added with a polymeric binder in solid or liquid form, in order to obtain a water and gasoline resistant surface coating.

### DESCRIPTION OF THE INVENTION

The object of the invention is to provide a method for the production of polyester-resin agglomerated stone slabs or blocks, which does not have the drawbacks typical of the processes previously mentioned; in particular, a method which results in the formation of hardened blocks where the free styrene and/or BTEX are absent or in any case are present in very small quantities and which can be implemented in a limited amount of time, also with a limited energy consumption for activating and maintaining the catalysis reaction, and a limited slab or block cooling time.

This result is achieved using a preferred ternary peroxide system and/or by means of suitable selection of the process operating parameters, as claimed in claim 1.

In particular, in the method according to the present invention, the starting compounds, namely the granulated stone material, the sand and/or the powders and the polyester resin are preheated, preferably separately, to a temperature of between 20 and 35°C, preferably between 25 and 30°C.

This preheating is performed using any method of the known art (for example using infrared-ray lamps, hot air flows, etc.); it should be noted that, depending on the season, i.e. summer or winter, a different amount of energy will be required, although the energy required for heating the components is nevertheless fairly limited.

The preheated compounds are then mixed thoroughly together with the initiator and optionally with the accelerating agent with consequent raising of the temperature of the mix by 5-10°C (through conversion of mechanical energy into thermal energy), in this way reaching temperatures of between 30 and 45°C; such mixing is performed preferably for a period of between 5 and 15 minutes and/or at a speed of between 10 and 100 rpm; according to a preferred aspect of the invention, the initiator and optionally the accelerating agent are mixed together with the polyester resin before the latter is mixed with the granulated stone material and/or the sand.

The mix thus obtained is then distributed in a mould, which is preferably made of metal and even more preferably steel, and is compacted.

After compaction, the mould and the mix inside it are placed in a environment with a controlled temperature of 45-55° C and preferably 50°C. In this way the mould heats up, absorbing the heat from the surrounding environment, and transfers said heat in turn to the mix contained inside it; in the meantime, the crosslinking reaction of the resin which is exothermic generates heat, heating the mix also from the inside; uniform heating of the mix is thus obtained, resulting in an increase in the temperature by 10-20°C, reaching temperatures of between 40 and 65°C and preferably 50-55°C.

The mould and mix are left in the aforementioned temperature-controlled environment for a period of between 3 and 8 hours, preferably between 5 and 6 hours, resulting in partial hardening of the block, allowing it to be handled.

The partially hardened hot slab or block is then removed from the metal mould (which may thus be used again during a new processing cycle) and placed in a environment with a controlled temperature of 45-55° C and preferably 50°C for a period of at least 12 hours, preferably between 20 to 30 hours, and even more preferably 24 hours. This last operation allows completion of the crosslinking action of the polyester resin, with consequent minimization of the residual free styrene and any BTEX.

The slab or block are finally removed from said temperature-controlled room and deposited in a space or room at ambient temperature, where they are left to cool slowly until they reach precisely said ambient temperature; said ambient temperature is therefore considered to be preferably a temperature of between 23 and 27°C, even more preferably 25°C; this step must be preferably performed without subjecting the slab or block to any thermal shocks, preventing it from being acted by cold air flows and avoiding an ambient temperature which is too low (in summer it is thus also possible to deposit the slab or the block outside, while in winter the slab or block must be deposited inside a heated environment; the time required for cooling down to ambient temperature is preferably between 10 and 24 hours.

From the above description it can be understood that the crosslinking reaction is therefore triggered at a temperature of between 45 and 55°C, preferably at 50°C, namely at a temperature which is in between the temperatures typical of the hot and cold processes known in the art; this temperature is sufficient to allow:
- heating of the starting mix and/or its components which is relatively short in duration (total of 30 hours) and does not require heating from the outside;
- cooling of the slab or block which is relatively short (one day) and in any case not problematic, considering the not particularly high temperature value;
- and, in particular, complete crosslinking of the resin.

The initiator used in the process according to the present invention is a mixture of peroxides; said mixture of peroxides is preferably present in an amount of between 1 and 3.0% by weight, preferably 1 and 1.5% by weight, relative to the weight of the resin; said peroxides are preferably not aromatic and/or are not dissolved in aromatic solvents.

Said mixture contains and preferably consists of:
(i) a very reactive peroxide, namely with a low half-life temperature (commonly defined as being the temperature at which the quantity of peroxide is halved 10 hours after heating), for example less than 30°C; said peroxide is preferably a ketone peroxide such as acetyl acetone peroxide and/or methyl ethyl ketone peroxide (normally used in "cold" processes); it is preferably used in an amount ranging between 1 and 60% by weight, preferably 5 and 25%, relative to the mixture of peroxides.
   a hydroperoxide, with a half-life temperature of between 130-170°C, preferably chosen from among tert-butyl hydroperoxide, tert-amyl-hydroperoxide and/or paramenthane hydroperoxide; it is preferably used in an amount ranging between 20 and 80% by weight, preferably between 33 and 70%, of the peroxide mixture;
(iii) a peroxide typically used for hot catalysis (with a half-life temperature of between 40 and 104°C); said peroxide is preferably a peroxyester, such as tert-butyl peroxide-3,5,5-trimethylhexanoate, tert-butyl-peroxyacetate, tert-butyl-peroxypivalate, tert-butyl-peroxymaleate and/or 3-hydroxy-1,1-dimethyl-butyl-peroxy neoheptanoate; it is preferably used in an amount ranging between 5 and 40%, preferably between 13 and 25%, of the peroxide mixture.

The specific nature of this ternary peroxide system, the use of which for the manufacture of conglomerate slabs or blocks constitutes one of the subjects of the present invention, is due to the fact that it allows completion or near completion of the crosslinking reaction, using up all or nearly all the styrene present, counterbalancing the opposing effects of the catalysts normally used in "cold" processes and the catalysts used in "hot" processes. Ternary peroxide systems are described for example in JP 2003 183543, JP 56 087474 and EP 0367397.

As for the accelerating agent it is normally one of the accelerating agents used in the "cold" processes; preferably it consists of a cobalt(II) complex, such as cobalt(II) naphthenates or octoates; It is also preferably present in an amount ranging between 0.06 and 0.15% by weight, even more preferably between 0.08 and 0.12% by weight, relative to the weight of the resin.

According to a further aspect of the invention, the mix of granulated stone material and/or sand, polyester resin, initiator and optional accelerating agent, before being placed in the temperature-controlled environment, is subjected to an intermediate compaction step by means of vibrocompression, or a vacuum compression operation, with the simultaneous application of a vibratory motion at a predetermined frequency, as described in IT1181570, incorporated herein by way of reference.

As is clear from the above description, the advantages achieved by the present invention may be summarised as follows:
- both the heating step and the cooling step are performed avoiding temperature gradients in the thickness of the slab or block and therefore stresses internally, these being the cause of possible cracking;
- production of a finished block and product (slab, tiles, etc.) without or with very little free styrene and BTEX;
- a short and simple production cycle time with minimum energy consumption.

### TESTS

### EXAMPLE 1

A number of chemical analyses were carried out on two blocks containing marble aggregate with a particle size of 1.2 mm and bonded with 18% by volume of commercial polyester resin (styrene content 35%), manufactured using two different methods.

The test involved an analysis by means of gas chromatography of the "head space" of a methanol extract of cryoground material.

### First block (classic cold catalysis system):

Initiator: 0.6 g on 100 g of acetyl-acetone-peroxide (AAP) resin + 0.6 g on 100 g of methyl-ethyl-ketone peroxide (MEKP) resin.

Accelerator: 0.06 - 0.12 g on 100 g of cobalt(II) octoate resin (cobalt content 6.0%)

Process data for preparation of the first block:
1. the raw materials are kept at an ambient temperature of 20°C;
2. the mould is kept at an ambient temperature of 20°C;
3. The quantity of peroxide (mixture of AAP and MEKP) is equal to 1.2 g on 100 g of resin;
4. the quantity of accelerator is equal to 0.06 g on 100 g of resin;
5. the mould with the compacted block is kept at ambient temperature;
6. the block is removed from the mould after 5 hours;
7. the block is left at ambient temperature for a further 5 days.

### Second block (ternary peroxide system according to the present invention)

Initiator:41 % acetyl-acetone-peroxide

| | |
|---|---|
| 38 % | tert-butyl hydroperoxide |
| 21 % | tert-butyl peroxy-3,5,5-trimethylhexanoate |

Accelerator: 0.06 - 0.12 g on 100 g of cobalt(II) octoate resin (cobalt content 6.0%)

Process data for preparation of the second block:
1. the raw materials (except for the resin additives) are preheated to 35°C;
2. the mould is temperature-controlled at 50°C;
3. The quantity of peroxide (mixture) is equal to 2.4 g on 100 g of resin;
4. the quantity of accelerator is equal to 0.12 g on 100 g of resin;
5. the mould with the compacted block is introduced into a ventilated oven at 50°C;
6. the block is removed from the mould after 4 hours;
7. the block is left at 50°C for a further 26 hours. The total time spent at 50°C is therefore equal to 30 hours.

The use of the ternary peroxide system according to the present invention, together with the catalysis process at an intermediate temperature, resulted in a significant reduction in the content of residual styrene and BTEX in the materials, as shown in the following table.

| | **First block** | **Second block** |
|---|---|---|
| | [mg/kg] | [mg/kg] |
| *benzene* = | 0 | 0.00 |
| *toluene* = | 1.6 | 0.98 |
| *ethyl-benzene* | 10.0 | 0.98 |
| *m*+*p*+*o xylene* = | 20.0 | 0.00 |
| *styrene* | **3300.0** | **6.89** |
| *iso-propyl-benzene* | 0 | 0.00 |
| *n-propyl-benzene*= | 4.6 | 0.49 |
| *1,3,5 trimethyl-benzene* = | 2.8 | 0.00 |
| *tert-butyl-benzene* = | 0 | 0.00 |
| *1,2,4-trimethyl-benzene* = | 8.9 | 0.00 |
| *sec-butyl-benzene* = | 7.1 | 0.00 |
| *p-isopropyl-benzene* = | 0 | 0.00 |
| *n-butyl-benzene* = | 0 | 0.00 |
| *naphthalene* = | 0 | 0.00 |
| BTEX | **31.55** | **1.96** |

### EXAMPLE 2

The analyses described in Example 1 were repeated comparing a "first block" corresponding to that of Example 1 with a second block obtained using the same method according to the present invention as here in the same example 1 and having the composition shown below in terms of initiator and accelerator:
Initiator:1.27 g of peroxide mixture on 100 g of resin; the composition of the peroxide mixture is as follows:

| | |
|---|---|
| 18 % | acetyl-acetone-peroxide |
| 65 % | tert-butyl hydroperoxide |
| 17 % | tert-butyl peroxy-3,5,5-trimethylhexanoate |

Accelerator: 0.1 g of cobalt(II) octoate on 100 g of resin.

The data relating to the reduction in the content of residual styrene and BTEX in the materials is shown in the following table.

| | **First block** | **Second block** |
|---|---|---|
| | [mg/kg] | [mg/kg] |
| *benzene* = | 0 | 0.00 |
| *toluene* = | 1.6 | 0.5 |
| *ethyl-benzene* | 10.0 | 4.1 |
| *m*+*p*+*o xylene* = | 20.0 | 0.02 |
| *styrene* | **3300.0** | **2.4** |
| *iso-propyl-benzene* | 0 | 1.5 |
| *n-propyl-benzene*= | 4.6 | 1.5 |
| *1,3,5 trimethyl-benzene* = | 2.8 | 0.00 |
| *tert-butyl-benzene* = | 0 | 0.00 |
| *1,2,4-trimethyl-benzene* = | 8.9 | 0.00 |
| *see-butyl-benzene* = | 7.1 | 0.00 |
| *p-isopropyl-benzene* = | 0 | 0.00 |
| *n-buryl-benzene* = | 0 | 0.00 |
| *naphthalene* = | 0 | 0.00 |
| BTEX | **31.6** | **4.6** |

### CONCLUSIONS

The advantageous aspects of the present invention may be summarised as follows: on the one hand, the manufacture of conglomerate slabs or blocks at temperatures of 50°C with results comparable to those of the known hot catalysis processes which involve temperatures higher than 80°C; on the other hand, a more efficient process, both in terms of duration and in terms of heat supply and therefore energy consumption.

## Claims

1. Process for the production of conglomerate slabs or blocks of granulated stone material, sand and/or powder bonded with crosslinked polyester resin, **characterized in that** it comprises the use of a mixture of peroxides containing a ketone peroxide, a hydroperoxide and a peroxyester, and **characterized in that** it comprises the following sequence of steps:
(a) preheating stone material, sand and/or powder and polyester resin;
(b) mixing said preheated stone material, sand and/or powder and polyester resin, said peroxide mixture and an accelerating agent;
(c) distributing the mix thus obtained in a mould and then compacting said mix;
(d) placing the mould and the mix contained therein in a temperature-controlled environment;
(e) removing the block thus obtained from the mould and placing it in a temperature-controlled environment;
(f) placing said block in a space or room at ambient temperature,
wherein the temperature-controlled environment according to steps (d) and/or (e) is temperature controlled at 45 to 55° C, and
wherein said block according to step (e) is left in said temperature-controlled environment for a period of at least 12 hours.

2. Process according to Claim 1, **characterized in that** said ketone peroxide is present in an amount ranging between 1 and 60% by weight, preferably between 5 and 25 %; said hydroperoxide is present in an amount ranging between 20 and 80% by weight, preferably between 33 and 70 %; and/or said peroxyester is present in an amount ranging between 5 and 40%, preferably between 13 and 25%, relative to the weight of the mixture.

3. Process according to Claim 1, **characterized in that** said ketone peroxide is chosen from between acetyl acetone peroxide and/or methyl-ethyl-ketone peroxide.

4. Process according to Claim 1, **characterized in that** said hydroperoxide is chosen from among tert-butyl hydroperoxide, tert-amyl-hydroperoxide and/or paramenthane hydroperoxide.

5. Process according to Claim 1, **characterized in that** said peroxyester is chosen from among tert-butyl peroxide-3,5,5-trimetylhexanoate, tert-butyl-peroxyacetate, tert-butyl-peroxypivalate, tert-butyl-peroxymaleate and/or 3-hydroxy-1,1-dimethyl-butyl-peroxy neoheptanoate.

6. Process according to Claim 1, **characterized in that** said mixture of peroxides is present in an amount ranging between 1 and 3.0 % by weight, preferably between 1 and 1.5% by weight, relative to the weight of the resin

7. Process according to Claim 1, **characterized in that** said accelerating agent is present in an amount ranging between 0.06 and 0.15 % by weight, preferably between 0.08 and 0.12% by weight, relative to the weight of the resin.

8. Process according to Claim 1, **characterized in that** said accelerating agent is a cobalt (II) complex, preferably a cobalt (II) naphthenate or octoate.

9. Process according to Claim 1, **characterized in that** said preheating according to step (a) is performed at a temperature of between 20 and 35°C, preferably between 25 and 30°C.

10. Process according to Claim 1, **characterized in that** said stone material, sand and/or powder and polyester resin according to step (a) are preheated separately.

11. Process according to Claim 1, **characterized in that** said mixing operation according to step (b) is performed for a period of between 5 and 15 minutes and/or at a speed of between 10 and 100 rpm.

12. Process according to Claim 1, **characterized in that** the initiator and optionally the accelerating agent are mixed with the polyester resin before it is mixed with the granulated stone material, the sand and/or with the powder.

13. Process according to Claim 1, **characterized in that** said mould is made of metal and preferably of steel.

14. Process according to Claim 1, **characterized in that** said environment according to steps (d) and/or (e) is temperature-controlled at 50°C.

15. Process according to Claim 1, **characterized in that** said mould and mix according to step (d) are left in said temperature-controlled environment for a period of between 3 and 8 hours and preferably between 5 and 6 hours.

16. Process according to Claim 1, **characterized in that** said block according to step (e) is left in said temperature-controlled environment for a period of at least 15 hours, preferably between 20 and 30 hours, and even more preferably 24 hours.

17. Process according to Claim 1, **characterized in that** said block according to step (f) is left in said space or room at ambient temperature for a period of between 10 and 24 hours.

18. Process according to Claim 1, **characterized in that** said mix, before being placed in the temperature-controlled environment according to step (e), is subject to vacuum vibrocompression.

19. Slabs or blocks which can be obtained by means of the process according to any one of Claims 1 to 18.

## Patentansprüche

1. Verfahren zur Herstellung von Konglomeratplatten oder Blöcken aus granuliertem Steinmaterial, Sand und/oder mit quervernetztem Polyesterharz-gebundenem Pulver, **dadurch gekennzeichnet, dass** es die Verwendung einer Mischung von Peroxiden einschließlich einem Ketonperoxid, einem Hydroperoxid und einem Peroxyester umfasst, **dadurch gekennzeichnet, dass** es die folgende Reihenfolge von Schritten umfasst:
(a) Vorheizen von Steinmaterial, Sand und/oder Pulver sowie Polyesterharz;
(b) Mischen des vorgeheizten Steinmaterials, Sandes und/oder Pulvers sowie Polyesterharzes mit der Peroxidmischung und einem Beschleunigungs-Agens;
(c) Verteilen der so enthaltenen Mischung in einer Form und anschließendes Verdichten der Mischung;
(d) Einbringen der Form und der darin enthaltende Mischung in eine temperaturkontrollierte Umgebung;
(e) Entfernen des so erhaltenen Blocks aus der Form und Einbringen von diesem in eine temperaturkontrollierte Umgebung;
(f) Einbringen des Blocks in einem Raum oder einem Platz bei Umgebungstemperatur,
wobei die temperaturkontrollierte Umgebung gemäß Schritten (d) und/oder (e) bei 45 bis 55°C temperaturkontrolliert ist, und
wobei der Block gemäß Schritt (e) für eine Zeitspanne von mindestens 12 Stunden in der temperaturkontrollierten Umgebung stehen gelassen wird.

2. Verfahren gemäß Anspruch 1, **dadurch gekennzeichnet, dass** das Ketonperoxid in einer Menge zwischen 1 und 60 Gew.-%, vorzugsweise zwischen 5 und 25 Gew.-% enthalten ist; das Hydroperoxid in einer Menge zwischen 20 und 80 Gew.-%, vorzugsweise zwischen 33 und 70 Gew.-% enthalten ist;
und/oder das Peroxyester in einer Menge zwischen 5 und 45%, vorzugsweise zwischen 13 und 25% relativ des Gewichts der Mischung enthalten ist.

3. Verfahren gemäß Anspruch 1, **dadurch gekennzeichnet, dass** das Ketonperoxid aus Acetylacetonperoxid und/oder Methyl-Ethyl-Ketonperoxid ausgewählt ist.

4. Verfahren gemäß Anspruch 1, **dadurch gekennzeichnet, dass** das Hydroperoxid aus *tert*-Butylhydroperoxid, *tert*-Amylhydroperoxid und/oder Paramenthanhydroperoxid ausgewählt ist.

5. Verfahren gemäß Anspruch 1, **dadurch gekennzeichnet, dass** das Peroxyester aus *tert*-Butylperoxid-3,5,5-trimethylhexanoat, *tert*-Butyl-Peroxyacetat, *tert*-Butyl-Peroxypivalat, *tert*-Butyl-Peroxymaleat und/oder 3-Hydroxy-1,1-dimethyl-butyl-peroxy Neoheptanoat ausgewählt ist.

6. Verfahren gemäß Anspruch 1, **dadurch gekennzeichnet, dass** die Mischung von Peroxiden in einer Menge zwischen 1 und 3,0 Gew.-%, vorzugsweise zwischen 1 und 1,5 Gew.-% relativ zum Gewicht des Harzes vorliegt.

7. Verfahren gemäß Anspruch 1, **dadurch gekennzeichnet, dass** das Beschleunigungs-Agens in einer Menge zwischen 0,06 und 0,15 Gew.-%, vorzugsweise zwischen 0,08 und 0,12 Gew.-% relativ zum Gewicht des Harzes vorliegt.

8. Verfahren gemäß Anspruch 1, **dadurch gekennzeichnet, dass** das Beschleunigungs-Agens ein Kobalt(II)-Komplex ist, vorzugsweise ein Kobalt(II)-Naphthenat oder -Oktoat.

9. Verfahren gemäß Anspruch 1, **dadurch gekennzeichnet, dass** das Vorheizen gemäß Schritt (a) bei einer Temperatur zwischen 20 und 35°C, vorzugsweise zwischen 25 und 30°C ausgeführt wird.

10. Verfahren gemäß Anspruch 1, **dadurch gekennzeichnet, dass** Steinmaterial, Sand und/oder Pulver sowie Polyesterharz gemäß Schritt (a) separat vorgeheizt werden.

11. Verfahren gemäß Anspruch 1, **dadurch gekennzeichnet, dass** der Mischvorgang gemäß Schritt (b) für eine Zeitspanne zwischen 5 und 15 Minuten und/oder einer Geschwindigkeit von zwischen 10 und 100 Umdrehungen pro Minute ausgeführt wird.

12. Verfahren gemäß Anspruch 1, **dadurch gekennzeichnet, dass** der Initiator und wahlweise das Beschleunigungs-Agens mit dem Polyesterharz gemischt werden, bevor es mit dem granulierten Steinmaterial, dem Sand und/oder mit dem Pulver vermischt wird.

13. Verfahren gemäß Anspruch 1, **dadurch gekennzeichnet, dass** die Form aus Metall und vorzugsweise aus Stahl hergestellt ist.

14. Verfahren gemäß Anspruch 1, **dadurch gekennzeichnet, dass** die Umgebung gemäß Schritten (d) und/oder (e) bei 50°C temperaturkontrolliert ist.

15. Verfahren gemäß Anspruch 1, **dadurch gekennzeichnet, dass** die Form und die Mischung gemäß Schritt (d) in der temperaturkontrollierten Umgebung für eine Zeitspanne von zwischen 3 und 8 Stunden, und vorzugsweise von zwischen 5 und 6 Stunden gelassen werden.

16. Verfahren gemäß Anspruch 1, **dadurch gekennzeichnet, dass** der Block gemäß Schritt (e) in der temperaturkontrollierten Umgebung für eine Zeitspanne von mindestens 15 Stunden, vorzugsweise zwischen 20 und 30 Stunden und noch mehr vorzugsweise 24 Stunden stehen gelassen wird.

17. Verfahren gemäß Anspruch 1, **dadurch gekennzeichnet, dass** der Block gemäß Schritt (f) in dem Raum oder dem Raum bei einer Umgebungstemperatur für eine Zeitspanne von zwischen 20 und 24 Stunden stehen gelassen wird.

18. Verfahren gemäß Anspruch 1, **dadurch gekennzeichnet, dass** die Mischung, bevor sie in die temperaturkontrollierte Umgebung gemäß Schritt (e) eingebracht wird, einer Vibro-Kompression unter Vakuum unterzogen wird.

19. Platten oder Blöcke, welche durch das Verfahren gemäß einem der Ansprüche 1 bis 18 erhalten werden können.

## Revendications

1. Procédé de production de dalles ou de blocs en aggloméré composés de matériau en pierre granulaire, de sable et/ou de poudre liés à une résine polyester réticulée, **caractérisé en ce qu'**il comprend l'utilisation d'un mélange de peroxydes contenant un peroxyde de cétone, un hydroperoxyde et un peroxyester, et **caractérisé en ce qu'**il comprend la séquence d'étapes suivante :
(a) préchauffage du matériau en pierre, du sable et/ou de la poudre et de la résine polyester ;
(b) mélange desdits matériau en pierre, sable et/ou poudre et résine polyester préchauffés, dudit mélange de peroxydes et d'un agent d'accélération ;
(c) répartition du mélange ainsi obtenu dans un moule puis compactage dudit mélange ;
(d) mise en place du moule et du mélange contenu dans celui-ci dans un environnement à température contrôlée ;
(e) retrait du bloc ainsi obtenu du moule et mise en place de celui-ci dans un environnement à température contrôlée ;
(f) mise en place dudit bloc dans un espace ou une pièce à température ambiante,
dans lequel l'environnement à température contrôlée selon les étapes (d) et/ou (e) a une température contrôlée de 45 à 55 °C, et
dans lequel ledit bloc selon l'étape (e) est laissé dans ledit environnement à température contrôlée pendant une période d'au moins 12 heures.

2. Procédé selon la revendication 1, **caractérisé en ce que** ledit peroxyde de cétone est présent en une quantité se situant entre 1 et 60 % en poids, de préférence entre 5 et 25 % ; ledit hydroperoxyde est présent en une quantité se situant entre 20 et 80 % en poids, de préférence entre 33 et 70 % ; et/ou ledit peroxyester est présent en une quantité se situant entre 5 et 40 %, de préférence entre 13 et 25 %, par rapport au poids du mélange.

3. Procédé selon la revendication 1, **caractérisé en ce que** ledit peroxyde de cétone est choisi parmi le peroxyde d'acétylacétone et/ou le peroxyde de méthyl-éthyl-cétone.

4. Procédé selon la revendication 1, **caractérisé en ce que** ledit hydroperoxyde est choisi parmi l'hydroperoxyde de tert-butyle, l'hydroperoxyde de tert-amyle et/ou l'hydroperoxyde de paramenthane.

5. Procédé selon la revendication 1, **caractérisé en ce que** ledit peroxyester est choisi parmi le peroxyde-3,5,5-triméthylhexanoate de tert-butyle, le tert-butyl-peroxyacétate, le tert-butyl-peroxypivalate, le tert-butyl-peroxymaléate et/ou le 3-hydroxy-1,1-diméthyl-butyl-peroxynéoheptanoate.

6. Procédé selon la revendication 1, **caractérisé en ce que** ledit mélange de peroxydes est présent en une quantité se situant entre 1 et 3,0 % en poids, de préférence entre 1 et 1,5 % en poids, par rapport au poids de la résine

7. Procédé selon la revendication 1, **caractérisé en ce que** ledit agent d'accélération est présent en une quantité se situant entre 0,06 et 0,15 % en poids, de préférence entre 0,08 et 0,12 % en poids, par rapport au poids de la résine.

8. Procédé selon la revendication 1, **caractérisé en ce que** ledit agent d'accélération est un complexe de cobalt (II), de préférence un naphténate ou un octoate de cobalt (II).

9. Procédé selon la revendication 1, **caractérisé en ce que** ledit préchauffage selon l'étape (a) est effectué à une température entre 20 et 35 °C, de préférence entre 25 et 30 °C.

10. Procédé selon la revendication 1, **caractérisé en ce que** lesdits matériau en pierre, sable et/ou poudre et résine polyester selon l'étape (a) sont préchauffés séparément.

11. Procédé selon la revendication 1, **caractérisé en ce que** ladite opération de mélange selon l'étape (b) est effectuée pendant une période entre 5 et 15 minutes et/ou à une vitesse entre 10 et 100 tr/min.

12. Procédé selon la revendication 1, **caractérisé en ce que** l'initiateur et facultativement l'agent d'accélération sont mélangés avec la résine polyester avant qu'elle ne soit mélangée avec le matériau en pierre granulaire, le sable et/ou avec la poudre.

13. Procédé selon la revendication 1, **caractérisé en ce que** ledit moule est fait de métal et de préférence d'acier.

14. Procédé selon la revendication 1, **caractérisé en ce que** ledit environnement selon les étapes (d) et/ou (e) a une température contrôlée à 50 °C.

15. Procédé selon la revendication 1, **caractérisé en ce que** lesdits moule et mélange selon l'étape (d) sont laissés dans ledit environnement à température contrôlée pendant une période entre 3 et 8 heures et de préférence entre 5 et 6 heures.

16. Procédé selon la revendication 1, **caractérisé en ce que** ledit bloc selon l'étape (e) est laissé dans ledit environnement à température contrôlée pendant une période d'au moins 15 heures, de préférence entre 20 et 30 heures, et encore plus préférablement pendant 24 heures.

17. Procédé selon la revendication 1, **caractérisé en ce que** ledit bloc selon l'étape (f) est laissé dans ledit espace ou ladite pièce à température ambiante pendant une période entre 10 et 24 heures.

18. Procédé selon la revendication 1, **caractérisé en ce que** ledit mélange, avant d'être placé dans l'environnement à température contrôlée selon l'étape (e), est soumis à une vibrocompression sous vide.

19. Dalles ou blocs qui peuvent être obtenus ay moyen du procédé selon l'une quelconque des revendications 1 à 18.
